Europäisches Patentamt

European Patent Office

Office européen des brevets

(11) Publication number: **0 240 952**
**A2**

## EUROPEAN PATENT APPLICATION

(21) Application number: 87104986.2

(51) Int. Cl.⁴: **B01J 2/20**

(22) Date of filing: 03.04.87

(30) Priority: 10.04.86 JP 82486/86
18.04.86 JP 90241/86

(43) Date of publication of application:
14.10.87 Bulletin 87/42

(84) Designated Contracting States:
DE FR GB IT

(71) Applicant: SUMITOMO CHEMICAL COMPANY,
LIMITED
15 Kitahama 5-chome Higashi-ku
Osaka-shi Osaka 541(JP)

(72) Inventor: Saegusa, Kunio
6-426, Ikkucho-2-chome
Niihama-shi(JP)
Inventor: Fujita, Hiroyuki
9-33, Suminoshindencho-1-chome
Niihama-shi(JP)

(74) Representative: Henkel, Feiler, Hänzel &
Partner
Möhlstrasse 37
D-8000 München 80(DE)

(54) A method for producing a flaky material.

(57) A method for producing a flaky material having various uses for improvements on paints, cosmetics, plastics, etc. and also having a use as a powdery material of ceramics or single crystals, which comprises (i) supplying a controlled amount of a base liquid selected from the group consisting of liquid metallic compounds and the solutions and sols of metallic compounds to a travelling smooth substrate using apparatus capable of forming liquid films to form a controlled thin film on the substrate, or (ii) once coating a base liquid selected from the group consisting of liquid metallic compounds and the solutions and sols of metallic compounds onto a travelling smooth substrate and regulating the thickness of the coating film to form a thin film, and then (iii) solidifying the formed thin film to turn it into a flaky material, followed by stripping the flaky material from the substrate.

EP 0 240 952 A2

## A METHOD FOR PRODUCING A FLAKY MATERIAL

The present invention relates to a method for producing flaky materials. Various flaky materials are so far well known. For example, flaky titanium oxide, flaky alumina, etc. are used, as incorporated in paints and cosmetics, to improve the spreadability and luster thereof. Also, they are used, as incorporated in plastics as a filler, for improving the mechanical properties thereof, etc., or as a powdery material for producing ceramics and single crystals. Like this, they are finding many applications.

For producing flakes, there is known a method, in the first place, in which a titanium compound is applied in the form of film to a smooth substrate and turned into flakes by dissolution, crushing, etc. of the substrate (Japanese Patent Publication No. 4781/1955).

Secondly, there is proposed a method in which an organic solvent solution of titanium alkoxide or titanium tetrachloride is coated onto a smooth surface and the formed film is cracked by the action of steam to obtain flakes (U.S. Patent Nos. 2,941,895 and 3,071,482).

Thirdly, there is proposed a method of coating an organic solvent solution of titanium compounds onto a substrate heated to a high temperature (Japanese Patent Publication No. 6424/1970).

Fourthly, drum flakers are so far known to produce resin flakes. This drum flaker is such that, on rotating the drum of which the lower part is dipped in a polymer, generally, in a molten state put in the vat, the liquid molten polymer attached to the surface of the drum is picked up from the vat with rotation of the drum to form a liquid film, and while rotating the drum, the formed liquid film is solidified by cooling water passing through the inside of the drum and scraped off by means of a scraper, etc.

These methods, however, have problems particularly in terms of the controllability of thickness of flakes and productivity, as described below.

The above first method has defects that operation is troublesome because of a necessity to dissolve the substrate, and also that it is difficult to obtain flaky materials of uniform size so that to produce the materials of the same size is very difficult.

The second and third methods are one for producing inorganic flaky materials by batch processes using glass plates and sheets limited in size, so that they are not suitable to produce flaky materials of uniform size in large amounts.

The fourth method, as described later, has an essential problem that once the viscosity of the liquid is determined, the thickness of the flake is determined only by the peripheral speed of the rotating drum, and therefore that the output cannot be controlled independently of the thickness of the flake. That is, the amount of the liquid picked up becomes large with an increase in the peripheral speed of the drum, so that the thickness of the flake becomes large. Consequently, when flakes of small thickness are desired, an extreme reduction in the productivity cannot be avoided.

An object of the present invention is to provide a method for producing flaky inorganic materials which is superior in the controllability of thickness of flake and mass productivity.

The present invention provides a method for producing flaky materials which comprises (i) supplying a controlled amount of one member (hereinafter referred to as base liquid) selected from the group consisting of liquid metallic compounds and the solutions and sols of metallic compounds to a travelling smooth substrate using apparatus capable of forming liquid films to form a controlled thin film on the substrate, or (ii) once coating a base liquid selected from the group consisting of liquid metallic compounds and the solutions and sols of metallic ompounds onto a travelling smooth substrate and regulating the thickness of the coating film to form a thin film, and then (iii) solidifying the formed thin film to turn it into a flaky material, followed by stripping the flaky material from the substrate.

The present invention will be illustrated in more detail.

In practicing the present invention, firstly for supplying a controlled amount of a base liquid selected from the group consisting of liquid metallic compounds and the solutions and sols of metallic compounds to a travelling smooth substrate using apparatus capable of forming liquid films to form a controlled thin film on the substrate, there is given a method with apparatus having a metering pump and a slit nozzle in combination. In this method, a metering pump is used to supply a controlled amount of the base liquid, and a slit nozzle is used to form a liquid film of the base liquid on the substrate, in which case the base liquid is coated onto the substrate through the slit nozzle.

For the metering pump, there are given diaphragm pumps, plunger pumps, bellows pumps, etc. which are commonly known as a metering pump. Particularly, in order to minimize the pulse of the base liquid, those which are equipped with an air chamber, etc. are suitable. The material of these pumps is selected from those which are resistant to the corrosive action of the base liquid.

For determining the material of the slit nozzle, firstly resistance to the corrosive action of the base liquid needs to be taken into account. Generally, stainless steel, tool steel, etc. are used.

For determining the shape of the slit nozzle, the thickness, size and output of flakes, the viscosity of the base liquid, etc. are taken into account. For example, when the output is made large or the viscosity of the base liquid is high, both the opening and pressure resistance of the slit are made large. The width of the slit is made smaller than that of the travelling smooth substrate.

According to this method, the base liquid is hardly brought into contact with the surrounding atmosphere until it is coated onto the substrate, so that this method is particularly suitable for the use of base liquids which are highly reactive or dangerous.

In addition, for supplying a controlled amount of the base liquid to the travelling smooth substrate to form a controlled thin film on the substrate, there is given a method with apparatus comprising from one roll to a plural number of rolls.

In this method, the base liquid is put in a container such as vats, etc., a pick-up roll is dipped in the base liquid and rotated to pick up the base liquid on it, and the liquid film formed on the pick-up roll is transferred to a travelling smooth substrate. The amount of the base liquid picked up by the pick-up roll is determined by the peripheral speed of the pick-up roll. In transferring the liquid film to the substrate, when the liquid amount is definite, the thickness of the transferred liquid film becomes small as the linear velocity of travelling of the substrate becomes high, while said thickness becomes large as said linear velocity becomes low.

This relationship is known to be expressed by the following equations:

$$W = A \bullet Vp^m$$
$$\theta = K \bullet Vp^m / Vd$$

wherein W represents the amount of the base liquid picked up, Vp represents the peripheral speed of a pick up roll which picks up the base liquid, $\theta$ represents the thickness of the liquid film, Vd represents the linear velocity of travelling of the substrate to which the liquid film is to be transferred, and A, K and m represent a constant.

Vp may properly be regulated according to the output of flakes, and generally, it is in a range of from about 1 to about 100 m/minute. Vd varies with the thickness and output of flakes, and generally, it is in a range of from about 1 to about 500 m/minute.

This method has characteristics that, because of the film thickness being well controllable, flakes of any thickness are easily obtained and variations in the thickness of flakes obtained are little, and also that, because the output is regulated by the peripheral speed of a pick-up roll, the range of regulation can be widened.

In this method, when the pick-up roll and the travelling smooth substrate to which the base liquid on the roll is to be transferred are positioned apart from each other, it is also possible to place one or more rolls between them, thereby successively transferring the base liquid from roll to roll.

In this case, by regulating the peripheral velocities and gaps between the rolls, the amount of the base liquid transferred can also be controlled. Further, this makes it possible to transfer the liquid film more uniformly to the smooth substrate.

As an alternative method, there is one in which an excess of the base liquid is picked up by the roll, the excess is scraped off by means of an air knife, bar coater, doctor blade or metering roll to control the amount of the base liquid on the roll and then the liquid film is transferred to the substrate. In this case, one or more mid-rolls may be placed between the pick-up roll and substrate with the gaps between the rolls and peripheral speeds of the rolls being varied. The amount of the base liquid supplied to the travelling smooth substrate is determined by the peripheral speed of the pick-up roll, the linear velocity of an air jet from the air knife, a gap between the bar coater or doctor blade and the roll, a peripheral speed of the metering roll, a gap between the pick-up roll and metering roll, etc. Consequently, the thickness of the liquid film on the substrate becomes small with an increase in the linear velocity of the substrate, while said thickness becomes large with a decrease in said linear velocity.

In this case, W cannot be expressed simply, but a relation of inverse proportion applies between $\theta$ and Vd like the foregoing equations.

These methods have a means to control the amount of the base liquid in addition to the peripheral speed of the rolls, so that a further wider regulation becomes possible. Also, when extra base liquid is scraped off, the surface of the liquid film can be smoothed.

In this case, successive transfer of the liquid film is also possible by placing a reverse roll between the pick-up roll and scrape-off portion, and between the scrape-off portion and substrate.

There is a further alternative method using a gravure roll for the pick-up roll or the mid-roll between the pick-up roll and substrate, in which method the liquid film is transferred to the substrate after controlling the amount of the base liquid by the density and depth of gravure patterns.

In this case, if the volume of the concave part of gravure patterns is D and a constant is C, W and $\theta$ are expressed by the following equations:

$$W = C \bullet D \bullet Vp$$

$$\theta = K \bullet Vp/Vd$$

In this method, the amount of the base liquid is controlled by the density and depth of gravure patterns, so that there is an advantage that said amount is not readily affected by the viscosity of the liquid, wettability of the roll by the liquid, etc.

The material of the roll, bar coater, doctor blade and substrate varies with the condition of use, and those which are resistant to the corrosive action of the base liquid are preferred. The material used varies with the base liquid, but there are given for example ceramic materials such as glass, enamel, etc., metallic materials such as stainless steel, aluminum, hard chromium-plated steel, etc., and polymeric materials such as polyester, nylon, rubber, etc.

On the other hand, there is no particular limitation to a method for once coating a base liquid selected from the group consisting of liquid metallic compounds and the solutions and sols of metallic compounds onto a travelling smooth substrate and regulating the thickness of the coating film to form a thin film, and the conventionally well-known coating methods and apparatus are used.

For example, there are methods such as spray coating, brushing, a method of applying the base liquid in the form of band to the smooth surface from a slit, etc.

In addition to this, there is a method of dipping a travelling smooth surface in the base liquid put in a container such as vats, etc., and said travelling smooth surface includes rotating roll surfaces, travelling belts, sheets or films, etc.

In this case, when the linear velocity of the travelling smooth surface is high, the thickness of the coating film becomes large, and vice versa. A relationship between the thickness and linear velocity can easily be obtained by a preliminary test. In either event, the liquid film formed by these methods should be larger in thickness than a liquid thin film required for finally obtained flaky materials having a prescribed thickness.

Next, the liquid film thus formed having a larger thickness is regulated so as to have a thickness corresponding to the prescribed thickness of finally obtained flaky materials. For this thickness regulation, the well-known methods and apparatus are also used. For example, there is a method of scraping off extra base liquid by means of an air knife, bar coater, doctor blade, metering roll, doctor roll or the like.

This thickness regulation is carried out before solidification of the liquid film coated onto the substrate, that is, while the liquid film keeps a liquid form or a plasticized state.

The material of the bar coater, doctor blade, metering roll, doctor roll, etc. are preferably those which are resistant to the corrosive action of the base liquid. The material used varies with the base liquid, but there are given for example ceramic materials such as glass, enamel, etc., metallic materials such as stainless steel, aluminum, etc., and polymeric materials such as polyester, nylon, etc.

The thickness of the liquid film can be determined from a relationship between that thickness and that of final flaky materials previously obtained by a preliminary test, every time flaky materials having a required thickness are produced.

Both the pick-up of the base liquid put in a container such as vats, etc. and the formation of the liquid film having a regulated thickness need not always be carried out on the same roll. For example, such a method may be employed that the base liquid put in a container is picked up by rotating the roll dipped in it, the thickness of the formed liquid film is regulated on the same roll or on a plural number of rolls by successive transfer of the liquid film from roll to roll, and finally the liquid film is transferred to the travelling smooth surface.

The materials and operations used in the methods of the present invention, i.e. the travelling smooth substrate, the base liquid to be coated onto the substrate selected from the groups consisting of liquid metallic compounds and the solutions and sols of metallic compounds, solidification of the thin film formed on the substrate and stripping of flaky materials from the substrate, are completely the same in either of a method of forming a controlled thin film on the substrate described first, or a method described secondly of once coating the base liquid onto the substrate and regulating the thickness of the resulting liquid film to form a thin film.

For the smooth substrate used in practicing the methods of the present invention, those having a shape suitable for continuous production such as rolls, belts, sheets, films, etc. are preferred. There is no strict distinction between belts, sheets and films, but belts, sheets and films stand in the order of larger thickness. Those having a thickness of 1 mm or less are generally called film.

For the material of the roll used as a substrate, metallic materials are generally used. When the base liquid used is strongly corrosive because of its strong acidity, rolls prepared by covering metals with glass or polymeric materials or rolls made of ceramics or high polymers are used.

For the belt, metallic materials or polymeric materials are used. For the sheet and film, polymeric materials, particularly polyesters, polyamides, polyimides, polypropylene, etc. are used.

When the substrate is soft belts, sheets or films like polymeric materials, it needs to have enough strength to resist pulling which is applied for its travelling. Consequently, when the liquid film is formed, it is necessary to support the substrate on a suitable apparatus for keeping the substrate flat such as backing rolls, etc.

These belts, sheets and films are caused to travel by connecting each of them at the both ends in the form of endless belt and rotating the belt, or by unrolling bulky rolls of them.

Any base liquid may be used if it will form a liquid film and turn flake by solidification treatment.

The base liquid is selected from the group consisting of metallic compounds which are a liquid in themselves, solutions of metallic compounds in suitable solvents and metallic compound sols.

Referring to the base liquids more particularly, one of the base liquids is a metallic compound represented by the general formula,

$$MX_nO_m$$

wherein M represents a metallic element, X represents one or more members selected from the group consisting of an alkyl, alkoxy, acyloxy and hydroxy groups and halogen atoms, O represents oxygen and n and m represent an integer, $n + 2m$ being the valence of the metallic element, its polymers and solutions thereof. The other of the base liquids is sols of metal oxides, metal hydroxides, metal sulfides, metal sulfates or organo-metal polymers.

Detailed explanation will be given to these metallic compounds represented by the general formula,

$$MX_nO_m$$

wherein M represents a metallic element, X represents one or more members selected from the group consisting of an alkyl, alkoxy, acyloxy and hydroxy groups and halogen atoms, O represents oxygen and n and m represent an integer, $n + 2m$ being the valence of the metallic element, and their polymers.

For the metal of the metallic compounds, there may be given divalent or more-valent metals, preferably metals belonging to Groups IIIa, IVa or IVb of the periodic table, more preferably one or more members selected from the group consisting of aluminum, silicon, titanium, zirconium and tin.

Of the organic group of the metallic compounds used in the present invention, the alkyl group includes methyl, ethyl, butyl, pentyl, lauryl, etc.; the alkoxy group includes methoxy, ethoxy, propoxy, butoxy, pentoxy, etc.; and the acyloxy group includes acetoxy, propionyloxy, butyryloxy, etc.

For such metallic compounds, there may be given the followings: Alkylalkoxyaluminums such as monoethyldiethoxyaluminum, monomethyldibutoxyaluminum, monoethyldipentoxyaluminum, dimethyl-monomethoxyaluminum, diisopropylmonoethoxyaluminum, dimethylmonoisopropoxyaluminum, diethyl-monopentoxyaluminum, etc.;

trialkoxyaluminums such as trimethoxyaluminum, triethoxyaluminum, triisopropoxyaluminum, tributoxyaluminum, tripentoxyaluminum, etc.; halogenated alkoxyaluminums such as monochlorodiethoxyaluminum, monochlorodiisopropoxyaluminum, monochlorodipentoxyaluminum, dichloromonomethoxyaluminum, dichloromonobutoxyaluminum, dibromomonomethoxy aluminum, etc.;

halogenated aluminums such as aluminum trichloride, aluminum tribromide, etc.;

halogenated alkylaluminums such as monochlorodiethylaluminum, monochlorodiisopropylaluminum, monochlorodibutylaluminum, monochlorodipentylaluminum, monobromodimethylaluminum, monoiododiethylaluminum, dichloromonoethylaluminum, dichloromonobutylaluminum, diiodomonoethylaluminum, etc.;

alkylacyloxyaluminums such as monobutyldiacetoxyaluminum, monomethyldipropionyloxyaluminum, monoisopropyldibutyryloxyaluminum, dimethylmonoacetoxyaluminum, dimethylmonopropionyloxyaluminum, etc.;

triacyloxyaluminums such as triacetoxyaluminum, tripropionyloxyaluminum, tributyryloxyaluminum, tripentanoyloxyaluminum, etc.;

halogenated acyloxyaluminums such as monochlorodiacetoxyaluminum, monobromodiacetoxyaluminum, dichloromonoisopropionyloxyaluminum, dibromomonoacetoxyaluminum, etc.; alkoxyacyloxyaluminums such as monomethoxydiacetoxyaluminum, monoethoxydipropionyloxyaluminum, dibutoxymonoacetoxyaluminum, diethoxymonobutyryloxyaluminum, etc.;

alkylalkoxysilanes such as monomethyltrimethoxysilane, monobutyltrimethoxysilane monomethyltriethoxysilane, monoethyltripentoxysilane, diethyldimethoxysilane, diisopropyldiethoxysilane, tributylmonomethoxysilane, trimethylmonoethoxysilane, triisopropylmonoethoxysilane, triethylmonopentoxysilane, etc.;

tetraalkoxysilanes such as tetramethoxysilane, tetraethoxysilane, tetraisopropoxysilane, tetrabutoxysilane, tetrapentoxysilane, etc.;

halogenated alkoxysilanes such as monochlorotrimethoxysilane, monochlorotributoxysilane, monobromotrimethoxysilane, dichlorodibutoxysilane, diiododiethoxysilane, trichloromonomethoxysilane, trichloromonopentoxysilane, tribromomonomethoxysilane, etc.;

halogenated silicons such as silicon tetrachloride, silicon tetrabromide, etc.;

halogenated alkylsilanes such as monochlorotrimethylsilane, monochlorotripentylsilane, monobromotrimethylsilane, monoiodotriethylsilane, dichlorodimethylsilane, dichlorodipentylsilane, trichloromonoethylsilane, trichloromonoisopropylsilane, tribromomonomethylsilane, etc.;

alkylacyloxysilanes such as monomethyltriacetoxysilane, monomethyltripropionyloxysilane, monoisopropyltributyryloxysilane, diethyldiacetoxysilane, diethyldipropionyloxysilane, trimethylmonoacetoxysilane, tributylmonoacetoxysilane, triethylmonobutyryloxysilane, etc.;

tetraacyloxysilanes such as tetraacetoxysilane, tetrapropionyloxysilane, tetrabutyryloxysilane, tetrapentanoyloxysilane, etc.;

halogenated acyloxysilanes such as monochlorotriacetoxysilane, monochlorotributyryloxysilane, monobromotriacetoxysilane, dichlorodiacetoxysilane, trichloromonoacetoxysilane, tribromomonoacetoxysilane, etc.;

alkoxyacyloxysilanes such as monobutoxytriacetoxysilane, monoethoxytripropionyloxysilane, monoisopropoxytributyryloxysilane, diethoxydiacetoxysilane, diisopropoxydibutyryloxysilane, tributoxymonoacetoxysilane, etc.;

alkylalkoxytitaniums such as monomethyltrimethoxytitanium, monobutyltrimethoxytitanium, monomethyltriethoxytitanium, monoethyltripentoxytitanium, diethyldimethoxytitanium, diisopropyldiethoxytitanium, tributylmonomethoxytitanium, trimethylmonoethoxytitanium, triisopropylmonoethoxytitanium, triethylmonopentoxytitanium, etc.;

tetraalkoxytitaniums such as tetramethoxytitanium, tetraethoxytitanium, tetraisopropoxytitanium, tetrabutoxytitanium, tetrapentoxytitanium, etc.;

halogenated alkoxytitaniums such as monochlorotrimethoxytitanium, monochlorotributoxytitanium, monobromotrimethoxytitanium, dichlorodibutoxytitanium, diiododiethoxytitanium, trichloromonomethoxytitanium, trichloromonopentoxytitanium, tribromomonomethoxytitanium, etc.;

halogenated titaniums such as titanium tetrachloride, titanium tetrabromide, etc.;

halogenated alkyltitaniums such as monochlorotrimethyltitanium, monochlorotripentyltitanium, monobromotrimethyltitanium, monoiodotriethyltitanium, dichlorodimethyltitanium, dichlorodipentyltitanium, trichloromonoethyltitanium, trichloromonoisopropyltitanium, tribromomonomethyltitanium, etc.;

alkylacyloxytitaniums such as monomethyltriacetoxytitanium, monomethyltripropionyloxytitanium, monoisopropyltributyryloxytitanium, diethyldiacetoxytitanium, diethyl dipropionyloxytitanium, trimethylmonoacetoxytitanium, tributylmonoacetoxytitanium, triethylmonobutyryloxytitanium, etc.;

tetraacyloxytitaniums such as tetraacetoxytitanium, tetrapropionyloxytitanium, tetrabutyryloxytitanium, tetrapentanoyloxytitanium, etc.;

halogenated acyloxytitaniums such as monochlorotriacetoxytitanium, monochlorotributyryloxytitanium, monobromotriacetoxytitanium, dichlorodiacetoxytitanium, trichloromonoacetoxytitanium, tribromomonoacetoxytitanium, etc.;

alkoxyacyloxytitaniums such as monobutoxytriacetoxytitanium, monoethoxytripropionyloxytitanium, monoisopropoxybutyryloxytitanium, diethoxydiacetoxytitanium, diisopropoxydibutyryloxytitanium, tributoxymonoacetoxytitanium, etc.;

alkylalkoxyzirconiums such as monomethyltrimethoxyzirconium, monobutyltrimethoxyzirconium, monomethyltriethoxyzirconium, monoethyltripentoxyzirconium, diethyldimethoxyzirconium, diisopropyldiethoxyzirconium, tributylmonomethoxyzirconium, trimethylmonoethoxyzirconium, triisopropylmonoethoxyzirconium, triethylmonopentoxyzirconium, etc.;

tetraalkoxyzirconiums such as tetramethoxyzirconium, tetraethoxyzirconium, tetraisopropoxyzirconium, tetrabutoxyzirconium, tetrapentoxyzirconium, etc.; halogenated alkoxyzirconiums such as monochlorotrimethoxyzirconium, monochlorotributoxyzirconium, monobromotri methoxyzirconium, dichlorodibutoxyzirconium, diiododiethoxyzirconium, trichloromonomethoxyzirconium, trichloromonopentoxyzirconium, tribromomonomethoxyzirconium, etc.;

halogenated zirconiums such as zirconium tetrachloride, zirconium tetrabromide, etc.;

halogenated alkylzirconiums such as monochlorotrimethylzirconium, monochlorotripentylzirconium, monobromotrimethylzirconium, monoiodotriethylzirconium, dichlorodimethylzirconium, dichlorodipentylzirconium, trichloromonoethylzirconium, trichloromonoisopropylzirconium, tribromomonomethylzirconium, etc.; alkylacyloxyzircnoiums such as monomethyltriacetoxyzirconium, monomethyltripropionyloxyzirconium, monoisopropyltributyryloxyzircnoium, diethyldiacetoxyzirconium, diethyldipropionyloxyzirconium, trimethylmonoacetoxyzirconium, tributylmonoacetoxyzirconium, triethylmonobutyryloxyzirconium, etc.; tetraacyloxyzirconiums such as tetraacetoxyzirconium, tetrapropionyloxyzirconium, tetrabutyryloxyzirconium, tetrapentanoyloxyzirconium, etc.; halogenated acyloxyzirconium such as monochlorotriacetoxyzirconium, monochlorotributyryloxyzirconium, monobromotriacetoxyzirconium, dichlorodiacetoxyzirconium, trichloromonoacetoxyzirconium, tribromomonoacetoxyzirconium, etc.; alkoxyacyloxyzirconiums such as monobutoxytriacetoxyzirconium, monoethoxytripropionyloxyzirconium, monoisopropoxytributyryloxyzirconium, diethoxydiacetoxy zirconium, diisopropoxydibutyryloxyzirconium, tributoxymonoacetoxyzirconium, etc.; alkylalkoxytins such as monomethyltrimethoxytin, monobutyltrimethoxytin, monomethyltriethoxytin, monoethyltripentoxytin, diethyldimethoxytin, diisopropyldiethoxytin, tributylmonomethoxytin, trimethylmonoethoxytin, triisopropylmonoethoxytin, triethylmonopentoxytin, etc.; tetraalkoxytins such as tetramethoxytin, tetraethoxytin, tetraisopropoxytin, tetrabutoxytin, tetrapentoxytin, etc.; halogenated alkoxytins such as monochlorotrimethoxytin, monochlorotributoxytin, monobromotrimethoxytin, dichlorodibutoxytin, diiododiethoxytin, trichloromonomethoxytin, trichloromonopentoxytin, tribromonomethoxytin, etc.; halogenated tins such as stannic chloride, stannic bromide, etc.; halogenated alkyltins such as monochlorotrimethyltin, monochlorotripentyltin, monobromotrimethyltin, monoiodotriethyltin, dichlorodimethyltin, dichlorodipentyltin, trichloromonoethyltin, trichloromonoisopropyltin, tribromomonomethyltin, etc.; alkylacyloxytins such as monomethyltriacetoxytin, monomethyltripropionyloxytin, monoisorpopyltributyryloxytin, diethyldiacetoxytin, diethyldipropionyloxytin, trimethylmonoacetoxytin, tributylmonoacetoxytin, triethylmonobutyryloxytin, etc.; tetraacyloxytins such as tetraacetoxytin, tetrapropionyloxy tin, tetrabutyryloxytin, tetrapentanoyloxytin, etc.; halogenated acyloxytins such as monochlorotriacetoxytin, monochlorotributyryloxytin, monobromotriacetoxytin, dichlorodiacetoxytin, trichloromonoacetoxytin, tribromomonoacetoxytin, etc.; alkoxyacyloxytins such as monobutoxytriacetoxytin, monoethoxytripropionyloxytin, monoisopropoxytributyryloxytin, diethoxydiacetoxytin, diisopropoxydibutyryloxytin, tributoxymonoacetoxytin, etc.; and mixtures of these compounds.

The polymers of these metallic compounds are obtained by reacting the metallic compounds with water or a carboxylic acid. In this reaction, hydrochloric acid, sulfuric acid, caustic soda, ammonia, etc. may be used as catalyst if necessary. Examples of the polymers include polymetalloxanes such as polyethoxyaluminoxane, poly(acetoxy-butoxy)siloxane, polyisopropoxytitanoxane, poly(butyl-ethoxy)zirconoxane, poly-(acetylchloro)stannoxane, etc.

Such metallic compounds and their polymers are a liquid or solid at room temperature. Since they should be a liquid at the time of use, when they are a solid, they are used as melted by heating or in solution in suitable solvents. Even though they are a liquid at room temperature, they may be used in soludion in solvents in order to obtain suitable concentrations.

The solvent used varies with the kind of metallic compounds, but the followings are preferably used : Water, alcohols (e.g. methanol, ethanol), aliphatic hydrocarbons (e.g. hexane, decane, cyclohexane), aromatic hydrocarbons (e.g. toluene, xylene), ketones (e.g. acetone), and mixed systems of these solvents.

The concentration of metallic compound in the base liquid varies also with the kind of the metallic compound, being not particularly limited. When the concentration is too low, however, the amount of solvent to be vaporized becomes large, being not economical. While when the concentration is too high, processability becomes sometimes poor. Consequently, concentrations of from about 2 to about 80 wt.% are generally used.

The metallic compounds which form a sol may be any of those which will form a sol in a suitable dispersion medium. For example, there may be given metal oxides, metal hydroxides, metal sulfides, metal salts (e.g. metal chlorides, metal sulfates), organo-metal polymers, etc.

For the metal of the metallic compounds, there may be given divalent or more-valent metals, preferably metals belonging to Groups IIIa, IVa or IVb of the periodic table, more preferably one or more members selected from the group consisting of aluminum, silicon, titanium, zirconium and tin. Specifically, there are given the following compounds:

Aluminum compounds such as alumina, aluminum hydroxide, aluminum sulfide, aluminum chloride, aluminum oxychloride, basic aluminum chloride, polyaluminum chloride, aluminum sulfate, aluminum acetate,

7

aluminum oxalate, aluminum alkoxide polymers (e.g. aluminum isopropoxide polymer), alkylaluminum polymers (e.g. triethylaluminum polymer), etc.;

silicon compounds such as silica, silicon oxychloride, silicon acetate, silicon oxalate, alkoxysilane polymers (e.g. tetraethylsilicate polymer), alkylchlorosilane polymers (e.g. dimethyldichlorosilane polymer), etc.; titanium compounds such as titania, titanium hydroxide, titanium sulfide, titanium oxychloride, titanium sulfate, titanium acetate, titanium oxalate, titanium alkoxide polymers (e.g. titanium isopropoxide polymer), titanium acetylacetonate, etc.;

zirconium compounds such as zirconium oxide, zirconium hydroxide, zirconium sulfide, zirconium oxychloride, zirconium sulfate, zirconium acetate, zirconium oxalate, zirconium alkoxide polymers (e.g. zirconium isopropoxide polymer), zirconium acetylacetonate, etc.; and tin compounds such as tin oxide, tin hydroxide, tin sulfide, tin chloride, tin oxychloride, basic tin chloride, tin sulfate, tin acetate, tin oxalate, tin alkoxide polymers (e.g. tin isopropoxide polymer), alkylalkoxytin polymers (e.g. monooctyltributoxytin polymer), etc.

These metallic compounds are a liquid or solid at room temperature. Since they should be a liquid sol at the time of use, they are dispersed in suitable dispersion media such as water, organic solvents, etc.

The dispersion medium used varies with the kind of metallic compounds, but the followings are preferably used : Water, alcohols (e.g. methanol, ethanol), aliphatic or alicyclic hydrocarbons (e.g. hexane, decane, cyclohexane), aromatic hydrocarbons (e.g. toluene, xylene), ketones (e.g. acetone), and mixed systems of these solvents.

The concentration of the metallic compound sol varies also with the kind of the metallic compound, being not particularly limited. When the concentration is too low, however, the amount of dispersion medium to be vaporized becomes large, being not economical. While when the concentration is too high, processability becomes sometimes poor. Consequently, the sols are generally used in a concentration of from about 2 to about 50 wt.%.

Hereupon, of the commercially available aqueous sols, silica sols include for example Ludox® HS-40 (a trade name of E.I. du Pont Co.), etc., and alumina sols include for example Alumina sol 100 (a trade name of Nissan Kagaku Kogyo Co.), etc. Further, as disperse systems in organic solvents, Methanol silica sol (a trade name of Nissan Kagaku Kogyo Co.), etc. are known.

For the preparation of these sols, for example silica sols, the following methods are known : Ion-exchange of water glass, neutralization of water glass with an acid, electro-dialysis of water glass, hydrolysis of ethylsilicate, etc. Also, for the preparation of alumina sols, hydrolysis of hydrolyzable compounds such as aluminum acetate by means such as heating, etc. is well known [For details, refer to Science of novel industrial materials, Silica and alumina (colloidal products), pp. 59 - 127; Chemical handbook (third revised edition), Application, pp. 132, edited by Nippon Kagaku-Kai].

Further, when special sols are required, they can be prepared by the well-known methods, for example, described in the foregoing literatures.

For stabilizing the sols, addition of proper pH-regulators, for example small amounts of hydrochloric acid, caustic soda or the like is effective.

In order to make the thickness of the coating film uniform, the followings may be added to the base liquid : Polymeric substances such as polyols, ethyl cellulose, etc.; high-boiling organic substances such as butyl cellosolve, glycerin, etc.; nonionic or anionic surfactants, etc.

The well-known coloring matters comprising iron compounds, nickel compounds, vanadium compounds, chromium compounds, manganese compounds, etc. may also be added.

The liquid film formed on the smooth substrate by the travelling of the substrate is subjected to solidification at other positions.

This solidification is a treatment wherein, when the liquid film is made of a liquid metallic compound, the compound is subjected to thermal decomposition, hydrolysis, oxidative decomposition or condensation, and wherein, when the liquid film is made of a solution of metallic compound, the compound is subjected to thermal decomposition, hydrolysis, oxidative decomposition or condensation while vaporizing the solvent.

When the liquid film is made of a metallic compound sol, this solidification is a treatment wherein the sol is first gelled by vaporization of the dispersion medium, and then if necessary, the sol is subjected to thermal decomposition, hydrolysis, oxidative decomposition or condensation.

These treatments need heating. Preferably, this heating is slowly carried out so as not to form air bubbles in the thin film.

For carrying out heating in practice, the substrate itself may be pre-heated, or when the substrate has the form of a roll, it may be heated by passing a heating medium through the inside of the roll. Also, by setting up a heating zone, the liquid film of the base liquid may directly be heated by hot air, electric or infrared heaters, high-frequency waves, etc. In this case, when the substrate has the form of a belt or film, the removal of solvent can effectively be carried out with hot air, etc. because the length of the heating zone may be changed optionally.

The heating temperature depends upon the vaporizability of the solvent to be removed, so that it cannot be determined indiscriminately. Generally, however, a temperature of from room temperature to about 250°C is suitable.

Hydrolysis, oxidative decomposition and condensation described above proceed even in the presence of water and oxygen of such amounts as in the air. As need arises, however, water or steam may be supplied, or acids or alkalis may be used as a promotor.

Specifically, the liquid film is brought into contact with steam-containing gases (e.g. air) of from about room temperature to about 250°C, acid-containing gases, ammonia-containing gases, water or acid-containing solvents of from about room temperature to about 100°C, etc. The concentration of water, acids or alkalis (promoters) is properly regulated depending upon the kind of metallic compounds, desired reaction rates, etc.

For compounds which solidify by thermal decomposition, there are given metal alkoxides, etc., in which case condensation occurs by heating. For compounds which hydrolyze, there are given metal chlorides and metal alkoxides which condensate by reaction with water, and acids or alkalis may be added as catalyst. For compounds which solidify by the action of acids or alkalis, there are given metallic compounds such as alkylsilicates which condensate in the presence of a carboxylic acid.

By this solidification treatment, the volume of the thin film is shrunk and fine cracks are formed in the film. Thus, the thin film turns flake.

For stripping the flaky material from the substrate, methods such as mechanical scraping with a scraper, stripping by ultrasonic waves, etc. are used. And, when the substrate is flexible, stripping by bending the substrate, etc. are used.

The flakes of metallic compounds thus produced are transparent and have a high luster, so that they can be used even as such. However, depending upon uses, they are finished into final products by calcination at a temperature of from about 200°C to about 1100°C, preferably from 500°C to 900°C.

This calcination converts the metallic compounds to mainly oxides.

The flaky inorganic materials produced by the present invention are from about 0.01 to about 10 μm in thickness. However, depending upon intended uses, they are suitably crushed and used in a length of from about 1 to about 100 μm in general.

As described above in detail, by both regulating the amount of the base liquid supplied and controlling the linear velocity of travelling of the smooth substrate according to the method of the present invention, it becomes possible to produce flakes of any thickness in large amounts.

The flaky inorganic materials obtained by the method of the present invention can effectively be used as lustrous pigments for nail enamels, enamels, leather products, etc.; as pigments for cosmetics; as nacreous pigments or extenders used as a filler for food-packing plastics; as powdery materials for producing tubes of sodium lamps and ceramic products such as condensers, porcelain, etc.; as carriers for catalysts; for coating exterior metals of automobiles; and for producing pearl-glazed buttons by casting of unsaturated polyester resins.

The method of the present invention will be illustrated in more detail with reference to the following examples, but it is apparent that the method of the present invention is not limited to these examples.

Example 1

1149 Grams (3 moles) of zirconium tetrabutoxide was uniformly dissolved in 2540 g of n-hexane, and the resulting solution was taken as a base liquid.

After putting this base liquid in a vat, a roll of 30 cm in diameter and 15 cm in width (first roll) was dipped in this liquid at room temperature and rotated at a peripheral speed shown in Table 1. Just above this roll, a rubber roll of 30 cm in diameter (second roll) rotating at the same speed and in the same direction as in the first roll was placed so as to come into narrow contact with the first roll. Thus, the base liquid on the first roll was transferred to the second roll. A roll of 40 cm in diameter (third roll), a non-driven free-rotatable roll, was placed so as to come into slight contact with the second roll. Between the second and third rolls was passed a polyester film of 30 cm in width travelling in the same direction as in the second roll at a speed shown in Table 1 by means of a separate driving device. Thus, the base liquid on the second roll was rolled thinly and transferred to the polyester film.

Thereafter, the polyester film to which the base liquid was attached was horizontally passed through a dryer of 4 m in length in which the film was exposed to the downward stream of a 120°C nitrogen gas of 1 m/sec in flow rate. More than 90% of n-hexane was removed herein to form a zirconium tetraburoxide film on the polyester film. Subsequently, the polyester film was horizontally passed through a chamber of 4 m in length in a conditioned state of 80% in relative humidity and 80°C in temperature. In the chamber, hydrolysis and condensation of zirconium tetrabutoxide occurred to produce a polymer, and thus the film shrank in volume to turn fine flakes.

The polyester film to which the fine flakes were attached was introduced into a ultrasonic water vessel of 2 m in length to separate the flakes from the film. The stripped flakes were then recovered from water by means of a filter.

The polyester film was rolled up for re-use.

The flakes thus obtained were calcinated at 750°C to obtain flaky zirconia. The thickness and output of the flaky zirconia are shown in Table 1. The output was expressed by weight/meter of roll width/hour as zirconia.

## Table 1

| Peripheral speed or first roll (m/min) / Linear velocity of polyester film (m/min) | 10 | 20 | 40 | 80 |
|---|---|---|---|---|
| 5 | 0.48 | | | |
| | 0.3 | | | |
| 10 | 1.12 | 0.56 | 0.28 | |
| | 1.4 | 1.4 | 1.4 | |
| 15 | 2.9 | 1.4 | 0.7 | 0.4 |
| | 3.6 | 3.6 | 3.6 | 3.6 |
| 20 | 5.6 | 2.8 | 1.4 | 0.7 |
| | 7 | 7 | 7 | 7 |
| 30 | | | 3.6 | 1.8 |
| | | | 18 | 18 |

Upper numerals mean the thickness of flakes (μ).

Lower numerals mean the output per meter of roll

width (kg/hr).

Example 2

1149 Grams (3 moles) of zirconium tetrabutoxide was uniformly dissolved in 2540 g of butanol, and 90 g (5 moles) of water was mixed with this solution to prepare a sol. This sol was taken as a base liquid.

After putting this base liquid in a vat, a roll of 30 cm in diameter and 15 cm in width (first roll) was dipped in this liquid at room temperature and rotated at a peripheral speed shown in Table 2. Just above this roll, a rubber roll of 30 cm in diameter (second roll) rotating at the same speed and in the same direction as in the first roll was placed so as to come into narrow contact with the first roll. Thus, the base liquid on the first roll was transferred to the second roll. A roll of 40 cm in diameter (third roll), a non-driven free-rotatable roll, was placed so as to come into slight contact with the second roll. Between the second and third rolls was passed a polyester film of 30 cm in width travelling in the same direction as in the second roll at a speed shown in Table 2 by means of a separate driving device. Thus, the base liquid on the second roll was rolled thinly and transferred to the polyester film.

Thereafter, the polyester film to which the base liquid was attached was horizontally passed through a dryer of 4 m in length in which the film was exposed to the downward stream of a 120°C nitrogen gas of 1 m/sec in flow rate. More than 90% of butanol was removed herein to form the gelled film of the zirconium tetrabutoxide polymer sol. Subsequently, the polyester film was horizontally passed through a conditioned chamber of 4 m in length having a 120°C nitrogen gas atmosphere. In the chamber, the zirconium tetrabutoxide polymer gel shrank in volume with scattering of the dispersion medium to turn fine flakes.

The polyester film to which the fine flakes were attached was introduced into a ultrasonic water vessel of 2 m in length to separate the flakes from the film. The stripped flakes were then recovered from water by means of a filter.

The polyester film was rolled up for re-use.

The flakes thus obtained were calcined at 750°C to obtain flaky zirconia. The thickness and output of the flaky zirconia are shown in Table 2. The output was expressed by weight/meter of roll width/hour as zirnocia.

Table 2

| Peripheral speed of first roll (m/min) / Linear velocity of polyester film (m/min) | 10 | 20 | 40 | 80 |
|---|---|---|---|---|
| 10 | 2.2 | 1.2 | 0.6 | 0.3 |
|  | 2.75 | 2.75 | 2.75 | 2.75 |
| 15 |  | 2.8 | 1.4 | 0.7 |
|  |  | 7 | 7 | 7 |
| 20 |  |  | 2.7 | 1.4 |
|  |  |  | 13.6 | 13.6 |
| 30 |  |  |  | 3.5 |
|  |  |  |  | 34.5 |

Upper numerals mean the thickness of flakes ($\mu$).

Lower numerals mean the output per meter of roll width (kg/hr).

11

Example 3

190 Grams (1 mole) of titanium tetrachloride was mixed with 610 g of methanol to prepare a uniform solution. This solution was taken as a base liquid. After putting this base liquid in a vat, a roll of 30 cm in diameter and 15 cm in width (first roll) was dipped in this liquid at room temperature and rotated at a peripheral speed of 30 m/min. A slit was placed closely near this roll, and a jet of nitrogen was applied through the slit to the liquid film on the first roll to blow of a part of the base liquid.

The amount of the remaining liquid film attached to the first roll was controlled by the linear velocity of the jet of nitrogen at that time.

Thereafter, a roll of 40 cm in diameter (second roll), a non-driven free-rotatable roll, was placed so as to come into slight contact with the first roll. Between the first and second rolls was passed a polyester film of 30 cm in width travelling in the same direction as in the second roll and at a rate of 120 m/min by means of a separate driving device. Thus, the base liquid on the first roll was rolled thinly and transferred to the polyester film.

The polyester film to which the base liquid was attached was horizontally passed through a dryer of 8 m in length in which the polyester film was exposed to the downward stream of 1 m/sec in flow rate of a conditioned nitrogen gas having a temperature of 100°C and a relative humidity of 20%. Methanol was removed herein to form the film of a compound consisting mainly of dichlorodimethoxytitanium on the polyester film. At the same time, hydrolysis and condensation of the compound occurred to produce a polymer, and thus the formed film shrank in volume to turn fine flakes.

The polyester film to which the fine flakes were attached was introduced into a ultrasonic trichlene vessel of 2 m in length to separate the flakes from the film. The stripped flakes were then recovered from trichlene by means of a filter. The polyester film was rolled up for re-use.

The flakes thus obtained were calcined at 650°C to obtain flaky titania of from 8 to 40 $\mu$ in size and about 0.3 $\mu$ in thickness. The output was 3 kg/meter of roll width/hour as titania.

Example 4

Titanyl sulfate and sulfuric acid were mixed to prepare a solution having a titanium concentration of 0.25 mole/l and a sulfuric acid concentration of 0.9 mole/l. This solution was mixed with a 25 wt.% caustic soda solution with thorough stirring. The pH of the resulting solution was adjusted to 6 with an aqueous dilute caustic soda solution, and stirring was contined for 24 hours. The resulting titania sol solution having a titania concentration of 1.4 wt.% was taken as a base liquid.

After putting this base liquid in a vat, a roll of 10 cm in diameter and 60 cm in width (first roll) was dipped in this liquid at room temperature and rotated at a peripheral speed of 10 m/min. Just above this roll, a rubber roll of 30 cm in diameter (second roll) rotating at a peripheral speed of 10 m/min in the same direction as in the first roll was placed so as to come into narrow contact with the first roll. Thus, the base liquid on the first roll was transferred to the second roll. Thereafter, just above the second roll, a roll of 50 cm in diameter (third roll), which was rotated at a peripheral speed of 24 m/min in the same direction as in the second roll and heated by a heating medium from the inside, was placed so as to come into slight contact with the second roll. Thus, the base liquid on the second roll was rolled thinly and transferred to the third roll.

Thereafter, a 150°C air was streamed at a flow rate of 1 m/sec against the third roll to which the base liquid was attached. Thus, water in the base liquid was removed to cause gelation, and the formed gel shrank in volume and cracked to form titania flakes on the third roll. The flakes were scraped off by means of a scraper made of Swedish steel.

The flakes thus obtained were calcined at 650°C to obtain flaky titania of from 8 to 40 $\mu$ in size and about 1.5 $\mu$ in thickness. The output was 3 kg/meter of roll width/hour as titania.

Example 5

2320 Grams (10 moles) of monoacetoxydibutoxyaluminum was mixed with 2640 g of butanol to prepare a solution, and 180 g (10 moles) of water was added and reacted to prepare a butanol solution of poly-(butoxyacetoxy)aluminoxane. This solution was taken as a base liquid.

This base liquid was sent to a slit nozzle, being 1 mm in slit gap and 15 cm in width, at a rate of 5 kg/hour by means of a metering pump and applied to the surface of a roll of 30 cm in diameter and 15 cm in width (first roll) from the tip of the slit nozzle. A roll of 40 cm in diameter (second roll), a non-driven free-rotatable roll, was placed so as to come into slight contact with the first roll. Between the first and second rolls was passed a polyester film of 30 cm in width travelling at a rate of 100 m/min in the same direction as in the second roll by means of a separate driving device. Thus, the base liquid on the first roll was rolled thinly and transferred to the polyester film.

The polyester film to which the base liquid was attached was horizontally passed through a dryer of 8 m in length in which the polyester film was exposed to the downward stream of 1 m/sec in flow rate of a conditioned nitrogen gas having a temperature of 100°C and a relative humidity of 20%. Butanol was removed herein to form the film of a compound consisting mainly of polyaluminoxane on the polyester film. At the same time, hydrolysis and condensation of the compound occurred to produce a polymer, and thus the formed film shrank in volume to turn fine flakes.

The polyester film to which the fine flakes were attached was introduced into a ultrasonic trichlene vessel of 2 m in length to separate the flakes from the film. The stripped flakes were then recovered from thichlene by means of a filter. The polyester film was rolled up for re-use.

The flakes thus obtained were calcined at 1200°C to obtain flaky alumina of from 5 to 40 $\mu$ in size and 1.5 $\mu$ in thickness. The output per meter of roll width was 12 kg/hour as alumina.

Example 6

2460 Grams (10 moles) of tributoxyaluminum was mixed with 3020 g of butanol to prepare a solution, and 900 g (40 moles) of water was added thereto and reacted to prepare a butanol sol of aluminum hydroxide. This sol was taken as a base liquid.

After putting this base liquid in a vat, a roll of 30 cm in diameter and 15 cm in width (first roll) was dipped in this liquid at room temperature and rotated at a peripheral speed of 30 m/min. A slit was placed closely near this roll, and a jet of air was applied through the slit to the liquid film on the first roll to blow off a part of the base liquid.

The amount of the remaining liquid film attached to the first roll was controlled by the linear velocity of the jet of air at that time. Just above this roll, a roll of 30 cm in diameter (second roll) rotating at a peripheral speed of 30 m/min in the same direction as in the first roll was placed with a slight gap between them. Thus, the base liquid on the first roll was transferred to the second roll.

A roll of 40 cm in diameter (third roll), a non-driven free-rotatable roll, was placed so as to come into slight contact with the second roll. Between the second and third rolls was passed a polyester film travelling at a rate of 100 m/min by means of a separate driving device. Thus, the base liquid on the second roll was rolled thinly and transferred to the polyester film.

The polyester film to which the base liquid was attached was horizontally passed through a dryer of 8 m in length in which there was a 100°C nitrogen gas stream of 1 m/sec in flow rate. Butanol in the base liquid was removed to cause the volume shrinkage and cracking of the liquid film, and thus tin oxide flakes were formed on the polyester film.

The polyester film to which the fine flakes were attached was introduced into a ultrasonic trichlene vessel of 2 m in length to separate the flakes from the film. The stripped flakes were then recovered from trichlene by means of a filter. The polyester film was rolled up for re-use.

The flakes thus obtained were calcined at 1200°C to obtain flaky alumina of from 5 to 40$\mu$ in size and 1.5 $\mu$ in thickness. The output per meter of roll width was 12 kg/hour as alumina.

Example 7

Tetraethyl orthosilicate was taken as a base liquid. This liquid was put in a vat, and the first roll of 10 cm in diameter and 60 cm in width was dipped in this liquid and rotated at a peripheral speed of 5 m/min. Just above this roll, a rubber roll of 15 cm in diameter (second roll) rotating at a peripheral speed of 5 m/min in the same direction as in the first roll was placed so as to come into narrow contact therewith. Thus, the base liquid on the first roll was transferred to the second roll. Thereafter, this second roll was brought into slight contact with a stainless steel endless belt of 60 cm in width travelling at a rate of 10 m/min. Thus, the base liquid on the second roll was rolled thinly and transferred to the stainless steel endless belt.

The stainless steel endless belt to which the base liquid was attached was horizontally passed through a dryer of 2 m in length which was heated by a 150°C hot air and into which steam was blown. Thus, a tetraethyl orthosilicate film was formed on the endless belt. At the same time, hydrolysis and condensation of the compound occurred to produce a polymer, and thus the film shrank in volume to turn fine flakes.

The flakes on the endless belt were scraped off by means of a scraper made of Ekonol ® resin (produced by Sumitomo Chemical Co.), an aromatic polyester, to separate the flakes from the belt.

The flakes thus obtained were calcined at 500°C to obtain flaky silica of from 8 to 50 μ in size and about 2 μ in thickness. The output per meter of roll width was 0.8 kg/hour as silica.

Example 8

2605 Grams (10 moles) of stannic chloride was dissolved in 20 kg of water, and a solution of 1600 g (40 moles) of caustic soda in 10 kg of water was added dropwise thereto to prepare a tin oxide sol. This sol was taken as a base liquid. This base liquid was sent to a slit nozzle, 1 mm in gap and 20 cm in width, at a rate of 4.8 kg/hour by means of a metering pump and streamed through the tip of the nozzle onto a stainless steel roll, 50 cm in diameter and 20 cm in width, placed about 0.5 mm apart from the tip while rotating the roll at a peripheral speed of 3 m/min and heating it to 130°C from the inside. Thus, the base liquid was transferred to the roll.

Thereafter, a 150°C hot air was streamed at a rate of 1 m/sec against the roll to which the base liquid was attached. Thus, water in the base liquid was removed, and the volume shrinkage and cracking of the liquid film occurred to form tin oxide flakes on the roll. The flakes were scraped off by means of a scraper made of Swedish steel.

The flakes thus obtained were calcined at 900°C to obtain flaky tin oxide of from 3 to 15 μ in size and 3 μ in thickness. The output per meter of roll width was 1.2 kg/hour as tin oxide.

Example 9

2254 Grams (5 moles) of monooctyltributoxytin was dissolved in 2750 g of toluene, and the resulting solution was taken as a base liquid. After putting this base liquid in a vat, a roll of 10 cm in diameter and 20 cm in width (first roll) was dipped in this liquid at room temperature and rotated at a peripheral speed of 12 m/min. Just above this roll, a stainless steel roll of 50 cm in diameter and 20 cm in width (second roll) was placed with a gap of 200 μ between them while rotating the second roll at a peripheral speed of 30 m/min in the same direction as in the first roll and heating it to 130°C from the inside. Thus, the base liquid on the first roll was transferred to the second roll.

Thereafter, a 150°C steam-containing nitrogen gas was streamed at a rate of 1 m/sec against the second roll to which the base liquid was attached. Thus, toluene in the base liquid was removed, and at the same time, hydrolysis, volume shrinkage and cracking occurred to produce the flakes of a compound consisting mainly of poly(octylbutoxy)stannoxane on the second roll. The flakes were scraped off by means of a scraper made of Swedish steel.

The flakes thus obtained were calcined at 900°C to obtain flaky tin oxide of from 3 to 15 μ in size and 3 μ in thickness. The output per meter of roll width was 6 kg/hour as tin oxide.

Example 10

A silica sol (Ludox® HS-40; produced by E.I. du Pont Co.) was diluted with water so that the silica concentration was 8%, and the resulting sol was taken as a base liquid. After putting the base liquid in a vat, a roll of 10 cm in diameter and 20 cm in width (first roll) was dipped in this liquid at room temperature and rotated at a peripheral speed of 12 m/min. A roll (metering roll) rotating at a peripheral speed of 8 m/min in the same direction as in the first roll was placed closely near the first roll to control the thickness of the liquid film on the first roll. Just above the first roll, a stainless steel roll of 50 cm in diameter and 20 cm in width (second roll) was placed with a gap of 200 μ between them while rotating the second roll at a peripheral speed of 35 m/min in the same direction as in the first roll and heating it to 100°C from the inside. Thus, the base liquid on the first roll was transferred to the second roll.

Thereafter, a 120°C air was streamed at a rate of 1 m/sec against the second roll to which the base liquid was attached. Thus, water in the base liquid was removed, and the gel-form film of silica was formed on the second roll. On further removing water, volume shrinkage of the film occurred to form cracks, and the film turned silica flakes. The flakes were scraped off by means of a scraper made of Swedish steel.

The flakes thus obtained were calcined at 600°C to obtain flaky silica of from 3 to 15 $\mu$ in size and 1 $\mu$ in thickness. The output per meter of roll width was 2.5 kg/hour as silica.


Example 11

114 Grams (1 mole) of triethylaluminum was dissolved in 286 g of tetrahydrofuran and reacted with 120 g (2 moles) of isopropanol to synthesize monoethyldiisopropoxyaluminum which was then reacted with 50 g (0.25 mole) of lauric acid to prepare a base liquid.

After putting the base liquid in a vat, a roll of 10 cm in diameter and 20 cm in width (first roll) was dipped in this liquid at room temperature and rotated at a peripheral speed of 20 m/min. The amount of the base liquid picked up by the first roll was controlled by pressing a bar coater having a gap of 200 $\mu$ against the roll. Just above the first roll, a stainless steel roll of 50 cm in diameter and 20 cm in width (second roll) was placed with a gap of 100 $\mu$ between them while rotating the second roll at a peripheral speed of 40 m/min in the same direction as in the first roll and heating it to 130°C from the inside. Thus, the base liquid on the first roll was transferred to the second roll.

Thereafter, a 150°C steam-containing nitrogen gas was streamed at a rate of 1 m/sec against the second roll to which the base liquid was attached. Thus, tetrahydrofuran in the base liquid was removed, and at the same time, hydrolysis, volume shrinkage and crakcing occurred to produce the flakes of a compound consisting mainly of polyaluminoxane on the second roll. The flakes were scraped off by means of a scraper made of Swedish steel.

The flakes thus obtained were calcined at 900°C to obtain flaky alumina of from 5 to 25 $\mu$ in size and 1 $\mu$ in thickness. The output per meter of roll width was 3.2 kg/hour as alumina.


Example 12

A silica sol with metahnol as a dispersion medium (trade name, Methanol silica sol; produced by Nissan Kagaku Kogyo Co.) was adjusted so that the silica concentration was 5%, and the resulting sol was taken as a base liquid.

After putting the base liquid in a vat, a roll of 10 cm in diameter and 20 cm in width (first roll) was dipped in this liquid at room temperature and rotated at a peripheral speed of 18 m/min. The thickness of the liquid film on the first roll was controlled by pressing a bar coater having a gap of 200 $\mu$ against the roll. Just above the first roll, a stainless steel roll of 50 cm in diameter and 20 cm in width (second roll) was placed with a gap of 100 $\mu$ between them while rotating the second roll at a peripheral speed of 50 m/min in the same direction as in the first roll and heating it to 100°C from the inside. Thus, the base liquid on the first roll was transferred to the second roll.

Thereafter, a 120°C air was streamed at a rate of 1 m/sec against the second roll to which the base liquid was attached. Thus, water in the base liquid was removed, and the gel-form film of silica was formed on the second roll. On further removing water, volume shrinkage of the film occurred to form cracks, and the film turned silica flakes. The flakes were scraped off by means of a scraper made of Swedish steel.

The flakes thus obtained were calcined at 600°C to obtain flaky silica of from 3 to 25 $\mu$ in size and 0.5 $\mu$ in thickness. The output per meter of roll width was 2 kg/hour as silica.


Example 13

An alumina sol (Alumina sol 100; produced by Nissan Kagaku Kogyo Co.) was diluted with water so that the alumina concentration was 3%, and the resulting sol was taken as a base liquid. This base liquid was put in a vat, and the first roll of 10 cm in diameter and 60 cm in width was dipped in this liquid and rotated at a peripheral speed of 10 m/min. Just above this roll, a rubber roll of 15 cm in diameter (second roll) rotating at a peripheral speed of 10 m/min in the same direction as in the first roll was placed so as to come into narrow contact therewith. Thus, the base liquid on the first roll was transferred to the second roll. Thereafter, this second roll was brought into slight contact with a stainless steel endless belt of 60 cm in width travelling at a rate of 7 m/min. Thus, the base liquid on the second roll was rolled thinly and transferred to the stainless steel endless belt.

The stainless steel endless belt to which the base liquid was attached was horizontally passed through a dryer of 2 m in length heated to 150°C by hot air. Thus, water was removed to form the film of the alumina sol on the endless belt, and the film shrank in volume to turn fine flakes.

The flakes on the endless belt were scraped off by means of a scraper made of Ekonol® resin (produced by Sumitomo Chemical Co.), an aromatic polyester, to separate the flakes from the belt.

The flakes thus obtained were calcined at 650°C to obtain flaky alumina of from 8 to 50 $\mu$ in size and about 2 $\mu$ in thickness. The output per meter of roll width was 1.2 kg/hour as alumina.

Example 14

1149 Grams (3 moles) of zirconium tetrabutoxide was dissolved in 2540 g of n-hexane to prepare a unfiorm solution, and this solution was taken as a base liquid.

This base liquid was put in a vat. Separately from this, a polyester film of 30 cm in width travelling at a rate of 80 m/min by a separate driving device was passed on a free roll (non-driven free-rotatable roll) of 30 cm in diameter, and this roll was dipped at room temperature in the base liquid in the vat.

A jet of nitroten gas was applied at a linear velocity of 2 m/sec to the liquid film formed on the polyester film through a slit of 1 mm in gap placed closely near the polyester film, to blow off a part of the base liquid.

After adjusting the thickness of the liquid film in this way, the polyester film was horizontally passed through a dryer of 4 m in length in which the film was exposed to the downward stream of 1 m/sec in velocity of a 120°C nitrogen gas. Thus, the gelled film of zirconium tetrabutoxide was formed on the polyester film.

Subsequently, the polyester film was horizontally passed through a conditioned chamber having a 120°C nitrogen gas atmosphere. Thus, the zirconium tetrabutoxide polymer gel shrank in volume with scattering of the dispersion medium to turn fine flakes.

The polyester film to which the flakes were attached, after once rolled into a roll, was dipped in a ultrasonic trichlene vessel of 1 m in length while unrolling the roll, thereby separating the flakes from the polyester film. The stripped flakes were then recovered from trichlene by means of a filter.

The polyester film was rolled up again for re-use.

The flakes thus obtained were calcined at 750°C to obtain flaky zirconia of 0.8 $\mu$ in thickness. The output per meter of roll width was 8 kg/hour as zirconia.

Example 15

2460 Grams (10 moles) of tributoxyaluminum was mixed with 3020 g of butanol to prepare a solution, and 900 g (40 moles) of water was added thereto and reacted to prepare a butanol sol of aluminum hydroxide. This sol was taken as a base liquid.

This base liquid was sent to a slit nozzle, 1 mm in gap and 20 cm in width, at a rate of 4.8 kg/hour by means of a metering pump and applied to a polyester film of 50 cm in width and 3000 m in length travelling at a rate of 100 m/min by a separate driving device on a free roll (non-driven free-rotatable roll) of 40 cm in diameter, during which a gap of about 0.5 mm was maintained between the tip of the slit nozzle and the polyester film. Thus, the base liquid was transferred to the polyester film in the form of thin film.

A roll (metering roll) rotating at a peripheral speed of 8 m/min in the same direction as in the free roll was placed closely near the free roll to regulate the thickness of the liquid film on the polyester film.

The polyester film was horizontally passed through a dryer of 8 m in length wherein there was a 100°C nitrogen gas stream of 1 m/sec in flow rate. Thus, butanol in the base liquid was removed, whereby the volume shrinkage and then cracking of the liquid film occurred to form tin oxide flakes on the polyester film.

The polyester film to which the flakes were attached was introduced into a ultrasonic trichlene vessel of 2 m in length to separate the flakes from the polyester film. The stripped flakes were recovered from trichlene by means of a filter.

The polyester film was rolled up for re-use.

The flaked thus obtained were calcined at 1200°C to obtain flaky alumina of from 5 to 40 $\mu$ in size and 1.5 $\mu$ in thickness. The output per meter of roll width was 12 kg/hour as alumina.

Example 16

Tetraethyl orthosilicate was taken as a base liquid.

This base liquid was sent to a slit nozzle, 1 mm in gap and 20 cm in width, at a rate of about 4.8 kg/hour by means of a metering pump and applied to a stainless steel roll of 80 cm in diameter and 20 cm in width placed about 0.5 mm apart from the tip of the slit nozzle, while rotating the roll at a peripheral speed of 3 m/min and heating it to 130°C from the inside. Thus, the base liquid was transferred to the roll.

A jet of air was applied to the liquid film on the roll through a slit placed closely near the roll to blow off a part of the base liquid. The thickness of the remaining liquid film attached to the roll was regulated by the linear velocity of the air jet at that time.

Thereafter, a 150°C air was streamed against the liquid film at a flow rate of 1 m/sec. Thus, water in the base liquid was removed, whereby the volume shrinkage and then cracking of the liquid film occurred to form silica flakes on the roll. The flakes were scraped off by means of a scraper made of Swedish steel.

The flakes thus obtained were calcined at 900°C to obtain flaky silica of from 8 to 15 $\mu$ in size and 3 $\mu$ in thickness. The output per meter of roll width was 0.5 kg/hour as silica.

Example 17

2605 Grams (10 moles) of stannic chloride was dissolved in 20 kg of water, and a solution of 1600 g (40 moles) of caustic soda in 10 kg of water was added dropwise thereto to prepare a tin oxide sol. This sol was taken as a base liquid.

This base liquid was sent to a slit nozzle, 1 mm in gap and 20 cm in width, at a rate of 4.8 kg/hour by means of a metering pump and streamed through the tip of the nozzle onto a stainless steel roll, 80 cm in diameter and 20 cm in width, placed about 0.5 mm apart from the tip while rotating the roll at a peripheral speed of 3 m/min and heating it to 130°C from the inside. Thus, the base liquid was transferred to the roll.

A jet of air was applied to the liquid film on the roll through a slit placed closely near the roll to blow off a part of the base liquid. The thickness of the remaining liquid film attached to the roll was regulated by the linear velocity of the air jet at that time.

Thereafter, a 150°C air was streamed against the roll having the liquid film thereon at a flow rate of 1 m/sec. Thus, water in the base liquid was removed, whereby the volume shrinkage and then cracking of the liquid film occurred to form tin oxide flakes on the roll. The flakes were scraped off by means of a scraper made of Swedish steel.

The flakes thus obtained was calcined at 900°C to obtain flaky tin oxide of from 8 to 15 $\mu$ in size and 3 $\mu$ in thickness. The output per meter of roll width was 1.2 kg/hour as tin oxide.

Example 18

2254 Grams (5 moles) of monooctyltributoxytin was dissolved in 2750 g of toluene, and the resulting solution was taken as a base liquid.

After putting the base liquid in a vat, a roll of 10 cm in diameter and 20 cm in width (first roll) was dipped in this liquid at room temperature and rotated at a peripheral speed of 18 m/min. Just above this roll, a stainless steel endless belt of 30 cm in width travelling at a peripheral speed of 20 m/min in the same direction as in the first roll was placed so as to come into slight contact with the first roll. Thus, the base liquid on the first roll was rolled thinly and transferred to the stainless steel endless belt. Thereafter, a bar coater having a gap of 100 $\mu$ was pressed against the endless belt to regulate the thickness of the liquid film.

The stainless steel endless belt to which the liquid film of regulated thickness was attached was horizontally passed through a dryer of 2 m in length which was heated by a 150°C hot air and into which steam was blown. Thus, toluene in the base liquid was removed, and at the same time, hydrolysis occurred to cause the volume shrinkage and then cracking of the liquid film.

The film of a compound consisting mainly of poly(octylbutoxy)stannoxane formed on the endless belt solidified and shrank in volume to turn fine flakes. The falkes were scraped off by means of a scraper made of Ekonol® resin (produced by Sumitomo Chemical Co.), an aromatic polyester, to separate the flakes from the endless belt.

The flakes thus obtained were calcined at 900°C to obtain flaky tin oxide of from 3 to 15 $\mu$ in size and 3 $\mu$ in thickness. The output per meter of roll width was 4 kg/hour as tin oxide.

Example 19

114 Grams (1 mole) of triethylaluminum was dissolved in 286 g of tetrahydrofuran and reacted with 120 g (2 moles) of isopropanol to synthesize monoethyldiisopropoxyaluminum which was then reacted with 50 g (0.25 mole) of lauric acid to prepare a base liquid.

After putting the base liquid in a vat, a roll of 10 cm in diameter and 60 cm in width (first roll) was dipped in this liquid at room temperature and rotated at a peripheral speed of 20 m/min. Just above this roll, a stainless steel roll of 50 cm in diameter and 20 cm in width (second roll) was placed with a gap of 100 $\mu$ between them while rotating the second roll at a peripheral speed of 40 m/min in the same direction as in the first roll and heating it to 130°C from the inside. Thus, the base liquid on the first roll was transferred to the second roll.

A bar coater having a gap of 75 $\mu$ was pressed against the second roll to regulate the thickness of the liquid film thereon.

A 150°C steam-containing nitrogen gas was streamed at a low rate of 1 m/sec against the liquid film formed on the second roll. Thus, tetrahydrofuran in the base liquid was removed, and at the same time, hydrolysis occurred to cause the volume shrinkage and cracking of the liquid film. Thus, flakes of a compound consisting mainly of polyaluminoxane were formed on the second roll. The flakes were scraped off by means of a scraper made of Swedish steel.

The flakes thus obtained were calcined at 900°C to obtain flaky alumina of from 5 to 25 $\mu$ in size and 1 $\mu$ in thickness. The output per meter of roll width was 3.2 kg/hour as alumina.

Example 20

An alumina sol (Alumina sol 100; produced by Nissan Kagaku Kogyo Co.) was diluted with water so that the alumina concentration was 3%, and the resulting sol was taken as a base liquid.

This base liquid was put in a vat, and the first roll of 10 cm in diameter was dipped in the liquid and rotated at a peripheral speed of 20 m/min. Just above this roll, a rubber roll of 15 cm in diameter (second roll) rotating at a peripheral speed of 20 m/min in the same direction as in the first roll was placed so as to come into narrow contact therewith. Thus, the base liquid on the first roll was transferred to the second roll.

The second roll was then brought into slight contact with a stainless steel endless belt of 30 cm in width travelling at a rate of 7 m/min. Thus, the base liquid on the second roll was rolled thinly and transferred to the endless belt.

A jet of air was applied to the liquid film on the stainless steel endless belt through a slit nozzle placed closely near the endless belt to blow off a part of the base liquid. The thickness of the remaining liquid film attached to the endless belt was regulated by the linear velocity of the air jet at that time.

Subsequently, the endless belt was horizontally passed through a dryer of 2 m in length heated to 150°C by hot air. Thus, water in the base liquid was removed to form an alumina sol film on the belt, and the film shrank in volume to turn fine flakes.

The flakes attached to the stainless steel endless belt were scraped off by means of a scraper made of Ekonol® resin (produced by Sumitomo Chemical Co.), an aromatic polyester, to separate the flakes from the endless belt.

The flakes thus obtained were calcined at 650°C to obtain flaky alumina of from 8 to 50 $\mu$ in size and about 2 $\mu$ in thickness. The output per meter of roll width was 1.2 kg/hour as alumina.

# 0 240 952

## Claims

1. A method for producing a flaky material which comprises (i) supplying a controlled amount of a base liquid selected from the group consisting of liquid metallic compounds and the solutions and sols of metallic compounds to a travelling smooth substrate using apparatus capable of forming liquid films to form a controlled thin film on the substrate, or (ii) once coating a base liquid selected from the group consisting of liquid metallic compounds and the solutions and sols of metallic compounds onto a travelling smooth substrate and regulating the thickness of the coating film to form a thin film, and then (iii) solidifying the formed thin film to turn it into a flaky material, followed by stripping the flaky material from the substrate.

2. A method for producing a flaky material according to Claim 1 wherein the travelling smooth substrate is at least one member selected from the group consisting of the form of roll, form of belt, form of sheet and form of film.

3. A method for producing a flaky material according to Claim 1 wherein the apparatus for forming the controlled thin film on the travelling smooth substrate is a combination of a metering pump and a slit nozzle.

4. A method for producing a flaky material according to Claim 1 wherein the apparatus for forming the controlled thin film on the travelling smooth substrate comprises one roll to a plural number of rolls.

5. A method for producing a flaky material according to Claim 1 wherein the apparatus for forming the controlled thin film on the travelling smooth substrate is a combination of a roll and either one of an air knife, bar coater, metering roll or doctor blade.

6. A method for producing a flaky material according to Claim 1 wherein a means for regulating the thickness of coating film is an air knife, bar coater, doctor blade, metering roll and doctor roll.

19